(19) Europäisches Patentamt
European Patent Office
Office européen des brevets

(11) **EP 3 575 384 A1**

(12) **EUROPEAN PATENT APPLICATION**

(43) Date of publication:
**04.12.2019 Bulletin 2019/49**

(51) Int Cl.:
*C10G 1/06* [(2006.01)]       *C01B 3/32* [(2006.01)]
*C10G 11/18* [(2006.01)]       *C10G 3/00* [(2006.01)]
*C10G 1/08* [(2006.01)]

(21) Application number: **18174481.4**

(22) Date of filing: **28.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Total Research & Technology Feluy
7181 Seneffe (BE)**

(72) Inventors:
• **NESTERENKO, Nikolai
B-1402 Nivelles (Thines) (BE)**

• **MINOUX, Delphine
B-1400 Nivelles (BE)**
• **CURULLA-FERRE, Daniel
1180 Uccle (BE)**
• **DIVERCHY, Chantal
1470 Bousval (BE)**
• **SELS, Bert
2490 Balen (BE)**
• **DIJKMANS, Jan
2470 Retie (BE)**

(74) Representative: **Mazurelle, Jean et al
Total Research and Technology Feluy
Zone Industrielle Feluy C
7181 Seneffe (BE)**

(54) **BIPHASIC SOLVENT CATALYTIC PROCESS FOR THE PRODUCTION OF MONO-OXYGENATED MOLECULES FROM A BIO-FEEDSTOCK COMPRISING CARBOHYDRATES AND USE OF SAID MONO-OXYGENATED MOLECULES IN A FLUID CATALYTIC CRACKING PROCESS**

(57)     The invention relates to a biphasic catalytic process to produce an organic fraction containing mono-oxygenated molecules comprising six carbon atoms from a bio-feedstock containing carbohydrates , wherein the carbohydrates contained in the bio-feedstock provided to the reactor vessel in step b) show a crystallinity equal or lower than 40% as determined according to XRD; and wherein it further comprises subjecting the organic fraction recovered in step f) to a fluid catalytic cracking (FCC) process.

**Description**

**Field of the invention**

The invention is directed to a process for selectively converting a bio-feedstock containing carbohydrates, such as cellulose, under hydrogen pressure to produce mono-oxygenated molecules, preferably mono-oxygenated molecules comprising six carbon atoms and their use in the conventional refining processes for further upgrading to biofuel components and bio-monomers.

**Background of the invention**

Petrochemical resources are predicted to diminish in availability and will not be sufficient in the future to produce the energy and chemical materials needed by industrialized societies. Besides, the demand for energy and chemical materials will continue to increase. The economic difficulties caused by the increasing demand coupled with diminishing supply is driving efforts to develop alternative and sustainable ways to meet energy and raw material needs. Processing lignocellulosic feedstock, i.e. raw cellulosic like wood, into renewable light naphtha alkanes (e.g., hexane, pentane, methyl cyclopentane, cyclohexane, etc.) could lead to a gradual replacement of fossil feedstock for the production of chemicals, materials and fuels, as lignocellulosic feedstock is Earth's most abundant source of organic carbon.

The light naphtha components are useful as feedstock for an important number of types of fuels. For example, the light naphtha components can be used as feedstock for steam and catalytic cracking to produce value-added platform molecules like ethylene and propylene, as well as a precursor for the synthesis of bio-aromatics like benzene, or as gasoline fuel feedstock, or as fuel additives due to the concomitantly formed oxygenates.

Producing fuels and alkanes from biomass feedstock via catalytic processing primarily concentrates on sequential depolymerization of polysaccharides (when the polymeric feedstock is used), the formation of intermediates, the coupling of such intermediates to produce molecules with high heating value like alkanes and aromatics.

Meier, Jakobi and Faix, ("Catalytic Hydroliquefaction of Spruce Wood" in Journal of Wood Chemistry and Technology, Vol. 8, No. 4, pp. 523-542, 1988) describe catalytic hydroliquefaction of spruce wood particles, suspended in a process derived slurry oil, which has been conducted in a three 1-liter-capacity autoclave system using palladium (Pd) on active charcoal in concentrations of 1 %, 0.5 % and 0.1 % (based on wood) and red mud (10 %) as a once-through catalyst. In a series of successive experiments, the carrier slurry oil was separated from the net product oil (NPO) by trapping in a hot separator in order to recycle it. Decreasing Pd amounts in the catalyst increased viscosities of the carrier. In the presence of Pd, wood conversion rates of 95-97 % were obtained and yields of light-and middle distillate NPO decreased from 34 to 30 % when the amount of catalyst was reduced. The use of red mud gave NPO yields of 20 % and char yield increased to 37-43 %. In experiments with Pd, 4 % hydrogen (based on wood) was consumed compared to 1.7 % hydrogen with red mud.

A. Corma et al. report on Energy Environ. Sci.,2012, 5, 6328-6344, the 2-methylfuran to diesel pathway, which involves the conversion of pentose biopolymers into premium diesel via furfural, by means of hydroxylation/alkylation and hydrodeoxygenation reactions. In the hydroxyalkylation/alkylation step, two 2-methylfuran molecules react with an aldehyde or a ketone to yield $C_{12}$+ oxygenated intermediate molecules. The 2-methylfuran to diesel process is an environmentally friendly process able to produce a high yield (87%) of a premium diesel with a cetane number of more than 70 and an upper pour point of -75 °C from non-food biomass. A disadvantage of the process is high costs of the production of a single molecule, requirement of many reaction steps and purifications.

WO 2012145123 and WO 2013074437 describe a hydropyrolysis of lignocelluloses in a fluidized bed using the IH$^2$ technology that converts biomass through a two-stage catalytic pyrolysis process into gasoline, jet fuel and diesel. The product of the first gas phase stage hydrolysis has oxygen content below 10 wt% and low total acid number and could hence be further co-processed with vegetable/used oil in a Hydrotreated Vegetable Oil-like process. A disadvantage of this process is big hydrogen consumption, which is difficult to recover and purify.

WO 2012162001 describes a catalytic process for converting biomass to furan derivatives (e.g., furfural, furfuryl alcohol, etc.) using a biphasic reactor containing a reactive aqueous phase and an organic extracting phase containing an alkylphenol. The process provides a cost-effective route for producing furfural, furfuryl alcohol, levulinic acid hydroxymethylfurfural, γ-valerolactone, and the like. The products formed are useful as value-added intermediates to produce polymers, as precursors to diesel fuel, and as fuel additives. The acceptance of the mentioned oxygenates for fuel is rather limited and the costs of production of the individual molecules are very high via the described procedure.

Further, WO2015172208 describes a one-step liquid biphasic catalytic process for converting a carbohydrate-containing feedstock, preferably lignocellulose, to highly paraffinic light naphtha in presence of an acidic reactive aqueous phase and a redox catalyst in the organic extracting/reaction phase. The process provides a cost-effective route for producing light-naphtha components, in the presence or in the absence of deoxygenates. However, the process leads often to over cracking due to pushing the conversion to paraffin and excessive hydrogen consumption. The produced naphtha is a good feedstock for the steam cracking but will found only limited applications in the refinery for biofuel production. The majority of the FCC and catalytic reformers units are not equipped to treat that type of feedstock, which contains essentially linear paraffin in C5-C6.

Many other processes imply transport of the biomass to the refineries and co-processing in different variations on the existing or revamp units (visbreaking, coking, FCC etc.). However, the biomass is a very low concentrated source of energy and carbons and the logistic costs for transporting a unit of energy would be very high. So, the treatment of the biomass at such a large scale as such after minor purification will never be interesting from the economic point of view. The bio-feedstock needs to be first concentrated in energy to be compatible with the existing units and ideally miscible with the hydrocarbon feedstock. The object of the invention is to provide a new one-step liquid biphasic catalytic process for converting a carbohydrate-containing bio-feedstock, preferably lignocellulose, to a cut of bio-oil miscible with hydrocarbons feedstocks and containing mainly mono-oxygenated compounds (>60%). The miscibility is insured by extraction of the bio-oil from the reaction medium in the bi-phasic system. Adjustment of the reaction conditions to the mono-oxygenated feedstock allows minimizing hydrogen consumption.

In addition, the mono-oxygenated compounds are the precursors of olefins and can be easily and efficiently processed in FCC or in HDO/HDS units. So, the logistics will be concentrated on transporting of the hydrocarbons feedstock to the bio-refinery, enrichment of the hydrocarbon feedstock in mono-oxygenated bio-oil followed by a return to the refinery of the bio-containing cut in order to upgrade it to useful products. This contribution provides a cost-effective approach to produce drop-in products, allows a lot of saving on separation sections, and has high yield and selectivity towards the bio-oil comprising mono-oxygenated molecules with mainly six carbon atoms.

**Summary of the invention**

According to a first aspect, the invention relates to a biphasic catalytic process to produce an organic fraction containing mono-oxygenated molecules comprising six carbon atoms from a bio-feedstock containing carbohydrates, and their use in a fluid catalytic cracking step, the process comprising the steps of:

   b) providing a reactor vessel with the bio-feedstock and with a biphasic liquid solution of:

   - an aqueous phase comprising an acid catalyst, and
   - an organic phase comprising a redox catalyst, optionally with an acid function;

   c) mixing the bio-feedstock with the biphasic liquid solution to form a biphasic liquid mixture with the carbohydrates being present in the aqueous phase, and bringing the reactor vessel under a hydrogen pressure of at most 10 MPa;
   d) heating the biphasic liquid reaction mixture until a first temperature T1 ranging from 70 to 180 °C to have the acid catalyst converting the carbohydrates into a cut soluble in the organic phase, wherein the cut is continuously extracted from the aqueous phase into the organic phase;
   e) heating the biphasic liquid reaction mixture until a second temperature T2 ranging from 150 °C to 230 °C, with T2 being higher than T1 ; and
   f) recovering the organic fraction, wherein said fraction contains a mixture of light naphtha and of mono-oxygenated molecules comprising six carbon atoms;

wherein the carbohydrates contained in the bio-feedstock provided to the reactor vessel in step b) show a crystallinity equal or lower than 40% as determined by XRD
and wherein it further comprises subjecting the organic fraction recovered in step f) to a fluid catalytic cracking (FCC) process.

Indeed, it has been found by the inventor that, surprisingly, the use of a bio-feedstock containing carbohydrates wherein the carbohydrates have a low crystallinity such as equal or lower than 40 % resulted in an increased product yield. The invention provides a process wherein the percentage yield of mono-oxygenated molecules comprising six carbon atoms is more than 30 %, thus more than 3 times, the yield of mono-oxygenated molecules comprising six carbon atoms obtained with the process described in WO2015172208.

It has also been found that, if the feedstock will be directly subjected to 200°C, the released from the cellulose oxygenated intermediate would be converted directly to the paraffin even before the complete transformation of the cellulose. This is why a low-temperature activation step is important to transform the cellulose first to the intermediate compound with similar reactivity followed by the controlled conversion at a higher temperature of those intermediates.

FCC processes are known to the person skilled in the art and for example described in EP0663434.

Advantageously, the cut soluble in the organic phase comprises or consists in furan and alcohols derivatives.

With preference, the temperature T2 is adjusted to obtain at least 10 wt.% of mono-oxygenated molecules comprising six carbon atoms in the recovered organic fraction.

Preferably, the temperature is increased from T1 to T2 at a rate of less than 60 °C/ hour, more preferably less than 50 °C/ hour, even more preferably less than 40 °C/ hour.

With preference, the carbohydrates contained in the bio-feedstock show a crystallinity equal or lower than 35%, more preferably equal or lower than 30%, most preferably equal or lower than 20% as determined according to XRD.

In an embodiment, the carbohydrates contained in the bio-feedstock are selected from the group comprising cellulose, hemicellulose, lignocellulose and/or a mixture thereof.

In a preferred embodiment, the invention provides a process including a further step of pretreatment of the bio-feedstock in order to lower its crystallinity before the bio-feedstock is subjected to the catalytic conversion process. Thus, with preference the process according to the invention comprises a further step a) of subjecting the bio-feedstock containing carbohydrates to a mechanical treatment, e.g. ball milling before providing it to the reactor vessel in step b).

According to a second aspect, the catalytic process according to the invention is controlled in order to preferably promote mono-oxygenated molecules production comprising six carbon atoms rather than light naphtha. Formation of the mono-oxygenated molecules reduces $H_2$ consumption and provides much more reactive and versatile precursors for further upgrading. This avoids over cracking and excessive hydrogen consumption while producing products usable in FCC process.

One should have mentioned that the mono-oxygenated bio-oil also has much lower gum potential relatively to any feedstock containing a higher concentration of oxygen. So, the invention provides a process focused on the production of a fraction of mono-oxygenated molecules of different structures (not a single n-hexane product) that are the intermediate products in prior art process described in WO2015172208. The advantage relative to the WO2015172208 is less hydrogen consumption, less dry gas production, higher reactivity on the refinery units and much higher versatility for utilization. In the same time, the mono-oxygenated cut is still perfectly miscible with the hydrocarbons of the organic phase because it is extracted from the reaction medium as a mixture with them.

The conversion level may be controlled also by adjustment of the temperature used in step e) and/or by the presence of sulfur in the organic phase or addition of S-containing compounds. The sulfur will limit hydrogenation of the mono-oxygenated compounds to paraffin at T2, the step e).

Therefore, preferably the second heating temperature T2 of step e) is ranging between 170 °C and 210 °C, preferably is ranging between 180 °C and 205 °C, more preferably is ranging between 190 °C and 200 °C.

In a preferred embodiment, the organic phase further comprises an organic solvent containing sulfur, preferably the organic solvent is a petroleum fraction.

The organic solvent may be a liquid petroleum fraction at 40 °C containing hydrocarbons from C5-C20.

In a preferred embodiment the organic solvent (i.e. the petroleum fraction) is straight naphtha from a naphtha feedstock, LCN (light cyclic naphtha), LCO (light cyclic oil), HCO (heavy cyclic oil), SRGO (straight run gas oil), naphtha fractions derived from natural gas, natural gas liquids or associated gas. The organic solvent may comprise naphtha fractions derived from delayed coker, pyrolysis gasoline ex-steam crackers. The naphtha feedstock may also comprise naphtha or naphtha fraction obtained from a Fischer-Tropsch process for synthesizing hydrocarbons from hydrogen and carbon monoxide. The organic solvent may comprise desalted light crude oil and shale oil.

The organic solvent may comprise olefins. However, as the olefins are not fully inert under the reaction conditions, the presence of olefins may result in secondary reactions, coking of catalyst. Preferably, the organic solvent may comprise from 0 to 20 wt% of olefins and preferably less than 0.2 wt% of diolefins, based on the total weight of the organic solvent. More preferably, the organic solvent may comprise from 0 to 10 wt% of olefins and less than 0.1 wt% diolefins. Optionally, the organic solvent is subjected to a selective hydrogenation treatment prior to being supplied to a process according to the present invention.

According to a third aspect of the invention, the process is autonomous in hydrogen. Indeed, the aqueous phase comprises non-converted oxygenated molecules that can be used in a steam reforming process for hydrogen production. The produced hydrogen can be supplied to the reactor vessel.

In a preferred embodiment, the process further comprises a step g) of recovering the non-converted oxygenated molecules in the aqueous phase, using them into a steam reforming process for hydrogen production, preferably the hydrogen produced is supplied into the reactor at step c).

In a preferred embodiment, the biphasic catalytic process of the invention is preferably controlled in order to increase the formation of hexanols (preferably 1-hexanol) versus the production of 2,5-dimethyl tetrahydrofuran (2,5-DMTHF) as precursors of light naphtha. Indeed, two pathways of reactions can be followed in the process, the aim is to promote one of them as much as possible. Thus, in a fourth aspect of the invention, the redox catalyst is selected to promote the formation of 1-hexanol.

With preference, one or more of the following features can be further used to further define the redox catalyst according to the invention:

- The redox catalyst comprises a metal selected from the group VIIIB or VIB (CAS terminology), preferably a metal selected from the group comprising Nickel, Ruthenium, Platinum, Palladium, Iron, Cobalt, Molybdenum, Tungsten and/or any mixture thereof, more preferably the redox catalyst comprises Nickel.

- The redox catalyst comprises a second metal selected from Silver and/or Tin. The presence of a second metal is used to adjust the selectivity.
- The redox catalyst may be bulk or supported material. The metal phase may be an individual metal, phosphide, carbides. The use of a phosphorous or carbide phase helps to stabilize the metal phase against elution in acid medium.
- The redox catalyst comprises a hydrophobic support; preferably the hydrophobic support is a carbon support, hydrophobic alumina, hydrophobic titania-silica or hydrophobic silica.
- The catalyst is pretreated before the reaction with a Lewis acid to introduce surface Lewis acidity.
- The redox catalyst comprises a support with surface pH ranging between 3 and 10.
- The acid to metal molar ratio of the catalyst is higher than 0.1, preferably higher than 0.15, more preferably higher than 0.2.

In an embodiment, the acid catalyst is selected from the group consisting of tungtosilicic acid, hydrochloric acid, 1-naphthalene sulphonic acid, or any mixture thereof. In a preferred embodiment, the acid catalyst is is tungtosilicic acid or hydrochloric acid, preferably the acid catalyst tungtosilicic acid.

With preference, one or more of the following features can be used to further define the process according to the invention:

- The volume ratio of the aqueous phase to the organic phase of the biphasic liquid mixture provided in step b) is ranging from 5:1 to 1:1.
- The hydrogen pressure of step b) is lower than 8 MPa, preferably lower than 7 MPa.
- The hydrogen pressure of step b) is higher than 2 MPa, preferably higher than 4 MPa.
- The mono-oxygenated molecules comprising six carbon atoms comprise hexanol, preferably they comprise 1-hexanol.
- The organic fraction recovered at step f) comprises at least 10 wt% of mono-oxygenated molecules comprising six carbon atoms, preferably at least 15 wt% of mono-oxygenated molecules comprising six carbon atoms, as based on the total weight of the organic fraction.
- The organic solvent contains at most 1 wt% of Me-containing catalyst. The content of metal on the catalyst is at most 10 wt%.
- The acid fraction contains the acid at proton concentration between 0.05 and 0.3 M.

**Description of the figures**

- Figure 1 shows the conversion of various types of cellulose to liquid products with 0.57M HCl and htTSA(2)Ru/C. $C_6O_1$-yield is indicated with data labels. SC = Sigmacell.
- Figure 2a illustrates the product selectivity of $C_6O_1$ products in the conversion with cellulose types to liquid products with 0.57M HCl and htTSA(2)Ru/C.
- Figure 2b illustrates the product selectivity in the conversion of various cellulose types to liquid products with various acids and htTSA(2)Ru/C and 0.57M HCl. $C_6O_1$-yield is indicated with data labels.
- Figure 3 illustrates the conversion of microcrystalline cellulose to liquid products with TSA and htTSA(2)Ru/C with varying water-decane ratio. The total volume of solvent was kept constant. $C_6O_1$-yield is indicated with data labels.
- Figure 4 illustrates the conversion of microcrystalline cellulose to liquid products with TSA and htTSA(2)Ru/C in function of time and temperature. $C_6O_1$-yield is indicated with data labels.
- Figure 5 illustrates the product yield of $C_6O_1$ products in function of temperature and reaction time.
- Figure 6 illustrates the conversion of microcrystalline cellulose to liquid products with TSA and htTSA(2)Ru/C with varying $H_2$-pressure. $C_6O_1$-yield is indicated with data labels.
- Figure 7 illustrates the conversion of ball-milled cellulose to liquid products with various acids and htTSA(2)Ru/C. The used acid concentration and type of acid are indicated. $C_eO_1$-yield is indicated with data labels.
- Figure 8 illustrates the product selectivity in the conversion of ball-milled cellulose to liquid products with various acids and htTSA(2)Ru/C. The used acid concentration and type of acid are indicated. $C_6O_1$-selectivity is indicated with data labels.
- Figure 9 illustrates conversion of microcrystalline cellulose to liquid products with TSA and various metal catalysts. Metal loading is indicated between brackets. Ht indicates that the catalyst was hydrothermally pretreated in presence of TSA in a typical pretreatment reaction. $C_6O_1$-yield is indicated with data labels.
- Figure 10 illustrates the product selectivity of $C_6O_1$ products in the conversion of microcrystalline cellulose to liquid products with TSA and various metal catalysts. Metal loading is indicated between brackets. Ht indicates that the catalyst was hydrothermally pretreated in presence of TSA in a typical pretreatment reaction.

- Figure 11 shows the reaction scheme for cellulose conversion to hexanes. $H^+$: acid catalyzed reaction, HG: hydrogenation and HDO: hydrodeoxygenation reaction.
- Figure 12 illustrates the conversion of microcrystalline cellulose to liquid products with TSA and 5 wt% Ru catalysts on different supports. All samples are reduced in $H_2$ and pretreated with TSA in a typical pretreatment before reaction. $C_6O_1$-yield is indicated with data labels.
- Figure 13 illustrates the total yield in organic products from microcrystalline cellulose with 5 wt% Ru on various carbon materials. a. Influence of C-support pH and b. influence of the C-support surface area.
- Figure 14 illustrates the product selectivity of microcrystalline cellulose to liquid products with HCl and htTSA(x)Ru/C pretreated with x mM of TSA during pretreatment. $C_6O_1$-selectivity is indicated with data labels.
- Figure 15 illustrates the conversion of microcrystalline cellulose and ball milled cellulose to liquid products with HCl and htTSA(16)Ru/C. $C_6O_1$-yield is indicated with data labels.
- Figure 16 illustrates the product selectivity of microcrystalline cellulose and ball milled cellulose to liquid products with HCl and htTSA(16)Ru/C. $C_6O_1$-yield is indicated with data labels.

**Detailed description of the invention**

For the purpose of the invention the following definitions are given:
The organic solvent may be a liquid petroleum fraction at 40 °C containing the hydrocarbons from C5-C20. The fraction is obtained by fractional distillation according to methods well-known by the person skilled in the art.

In a preferred embodiment, the organic solvent (i.e. the petroleum fraction) is straight naphtha, LCN (light cyclic naphtha), LCO (light cyclic oil), HCO (heavy cyclic oil), SRGO (straight run gas oil), naphtha fractions derived from natural gas, natural gas liquids or associated gas. The organic solvent may comprise naphtha fractions derived from delayed coker, pyrolysis gasoline ex-steam crackers. The organic solvent may also comprise naphtha or naphtha fraction obtained from a Fischer-Tropsch process for synthesizing hydrocarbons from hydrogen and carbon monoxide. The organic solvent may comprise desalted light crude oil and shale oil.

In the preferred embodiment, the organic solvent contains less than 50 ppm of sulfur, more preferably less than 20 ppm, the most preferably less than 10 ppm.

In the preferred embodiment, the organic solvent contains less than 20 ppm of basic nitrogen, more preferably less than 10 ppm of basic nitrogen, the most preferably less than 5 ppm.

In the preferred embodiment, the organic solvent contains at least 0.1 ppm of sulfur, more preferably between 1 and 5 ppm of sulfur.

The organic solvent may comprise olefins. However, as the olefins are not fully inert under the reaction conditions, the presence of olefins may result in secondary reactions, coking of catalyst. Preferably, the organic solvent may comprise from 0 to 20 wt% of olefins and preferably less than 0.2 wt% of diolefins, based on the total weight of the organic solvent. More preferably, the organic solvent may comprise from 0 to 10 wt% of olefins and less than 0.1 wt% diolefins. Optionally, the organic solvent is subjected to a selective hydrogenation treatment prior to being supplied to a process according to the present invention.

Naphtha is mainly a mixture of straight-chain, branched and cyclic aliphatic hydrocarbons. Naphtha is generally divided into light naphtha having from five to nine carbon atoms per molecule and heavy naphtha having from seven to twelve carbons per molecule. Typically, light naphtha contains naphthenes, such as cyclohexane and methylcyclopentane, and linear and branched paraffin, such as hexane and pentane. Light naphtha typically contains 60% to 99% by weight of paraffin and cycloparaffins.

The process uses a two-phase reactor system, wherein the carbohydrate-containing bio-feedstock or polymer is hydrolysed and the resulting monosaccharides dehydrated to 5-hydroxymethylfurfural (5-HMF) in an aqueous phase containing an acid catalyst, while the organic phase (preferably an alkane) contains a special redox catalyst, converting 5-HMF towards a mixture of light naphtha and of mono-oxygenated molecules comprising six carbon atoms through several cycles of dehydration/hydrogenation and/or formal hydrodeoxygenation.

The invention relates to a biphasic catalytic process to produce an organic fraction containing mono-oxygenated molecules comprising six carbon atoms from a bio-feedstock containing carbohydrates, the process comprising the steps of:

b) providing a reactor vessel with the bio-feedstock and with a biphasic liquid solution of:

- an aqueous phase comprising an acid catalyst, and
- an organic phase comprising a redox catalyst, optionally with an acid function;

c) mixing the bio-feedstock with the biphasic liquid solution to form a biphasic liquid mixture with the carbohydrates being present in the aqueous phase, and bringing the reactor vessel under a hydrogen pressure of at most 10 MPa;

d) heating the biphasic liquid reaction mixture until a first temperature T1 ranging from 70 to 180 °C to have the acid catalyst converting the carbohydrates into a cut soluble in the organic phase, wherein the cut is continuously extracted into the organic phase;

e) heating the biphasic liquid reaction mixture until a second temperature T2 ranging from 150 to 230 °C, with T2 being higher than T1, and

f) recovering the organic fraction, wherein said fraction contains a mixture of light naphtha and of mono-oxygenated molecules comprising six carbon atoms;

wherein the carbohydrates contained in the bio-feedstock provided to the reactor vessel in step b) show a crystallinity equal or lower than 40% as determined by XRD,

and in that it further comprises subjecting the organic fraction recovered in step f) to a fluid catalytic cracking (FCC) process.

Advantageously, the cut soluble in the organic phase comprises or consists in furane derivates.

In the process of the invention, a bio-feedstock containing carbohydrate (preferably cellulose) is hydrolyzed, dehydrated and dehydrogenated in the presence of an acid catalyst and a redox catalyst in order to produce an organic solution comprising mono-oxygenated molecules comprising six carbon atoms such as 1-hexanol that can be used in FCC process. The process according to the invention is directed to the production of light naphtha precursors and in particular to the production of 1-hexanol, wherein these light naphtha precursors are submitted to fluid catalytic cracking.

The invention is promoting selectivity of the process towards mono-oxygenated molecules comprising six carbon atoms so the organic fraction recovered at step f) comprises at least 10 wt% of mono-oxygenated molecules comprising six carbon atoms as based on the total weight of the organic fraction, preferably at least 15 wt%, more preferably at least 20 wt% and even more preferably at least 30 wt%.

Preferably the mono-oxygenated molecules comprising six carbon atoms comprise hexanol, preferably comprise 1-hexanol.

To achieved this goal, the process of the invention uses low crystallinity bio-feedstock that shows a crystallinity equal or lower than 40 %, preferably a crystallinity equal or lower than 30 % more preferably equal or lower than 20 %, even more preferably equal or lower than 10%, most preferably equal or lower than 5 % as determined according to XRD. It has been found by the inventors that surprisingly less crystalline bio-feedstock such as low crystalline cellulose is more reactive. Therefore, less crystalline cellulose leads to an increase of the process yield and of the selectivity towards mono-oxygenated molecules comprising six carbon atoms.

Low crystallinity can be obtained by selecting an appropriate bio-feedstock or can be obtained by lowering the crystallinity of an existing bio-feedstock. Thus, in an embodiment, the process according to the invention comprises a further step a) of subjecting the bio-feedstock containing carbohydrates to ball milling before providing it to the reactor vessel in step b). The ball milling of the bio-feedstock can be performed during a period ranging from 2 to 10 hours, preferably from 4 to 8 hours, at 500 rpm.

The carbohydrate-containing bio-feedstock may be selected from a variety of possible bio-feedstocks. It is possible to use agricultural raw materials or waste or other raw or purified/fractionated biomass resources. The carbohydrate-containing bio-feedstock may comprise in whole or in part of mono-, di-, oligo- or polysaccharides and/or mixtures thereof. The carbohydrate-containing bio-feedstock may comprise compounds other than carbohydrates. Such compounds include 5- hydroxymethylfurfural, levulinic acid, formic acid and furfural. However, preferably, mono-, di-, oligo- or polysaccharides are the major components of the carbohydrate-containing bio-feedstock. Suitably, the carbohydrate-containing bio-feedstock comprises from 30 to 100 %wt of mono-, di-, oligo- or polysaccharides, based on the weight of the total bio-feedstock. More preferably, the carbohydrate-containing bio-feedstock essentially consists of oligo and - polysaccharides. More preferably, the carbohydrates contained in the bio-feedstock are selected from the group comprising cellulose, hemicellulose, lignocellulose and/or a mixture thereof.

The process according to the invention is preferably conducted in order to promote the presence of mono-oxygenated molecules comprising six carbon atoms. This can be achieved by different ways such as the control of the second temperature used in step e) and/or by the presence of sulfur in the organic phase.

In the preferred embodiment, the reactive aqueous phase contains the acid catalyst and the carbohydrate reactant (preferably cellulose), whereas the organic phase extracts intermediate oxygenates like 5-HMF, collects the end products and serves as the reaction medium to carry out the hydrogenation and formal hydrogenolysis steps, e.g. through dehydration and hydrogenation cycles. Dehydration is favourable in presence of water-immiscible organic solvents. Hydrogenation is favourable in the organic phase due to the higher solubility of hydrogen gas in such solvent when compared to water. The best redox catalyst, therefore, shows a high affinity for the organic phase to efficiently assist the hydrogenation reactions.

Therefore, preferably, the second heating temperature T2 of step e) is ranging between 170 °C and 210 °C, preferably is ranging between 180 °C and 205 °C, more preferably is ranging between 190 °C and 200 °C. In a preferred embodiment, the second heating temperature is at most 200 °C.

Preferably, the temperature is increased from T1 to T2 at a rate of less than 60 °C/ hour, more preferably less than 50 °C/ hour, even more preferably less than 40 °C/ hour.

In a preferred embodiment, the hydrogen pressure of step c) is lower than 8 MPa, preferably lower than 7 MPa and/or higher than 2 MPa, preferably higher than 4 MPa. It has been found that a high pressure increases selectivity towards mono-oxygenated molecules comprising six carbon atoms.

The second heating temperature T2 of step e) is higher than the first temperature. In an embodiment, preferably the first heating temperature T1 of step e) is ranging between 90 °C and 170 °C, preferably is ranging between 110 °C and 160 °C, more preferably is ranging between 130 °C and 150 °C.

The biphasic liquid solution according to the invention comprises an aqueous phase comprising water and the acidic catalyst. The addition of other salts or additives is not excluded. The invention requires an acid catalyst. The acid catalyst is preferably a homo- or heteropolyacid (HPA), most preferably $H_4SiW_{12}O_{40}$. Mineral acids such as HCl, $HNO_3$, $H_2SO_4$, $H_3PC$, $H_3BO_3$, etc.; organic acids (e.g., oxalic acid, levulinic acid, citric acid, etc.); zeolites (Si/Al from 1 to 100), acid and super-acid resins (e.g., cation exchange resin); phosphates ($NbOPO_4$, vanadium phosphate); solid silica, silica-alumina, and titania-based supports functionalized by acid groups, and other Lewis acids may also be used.

In an embodiment, the acid catalyst is selected from the group consisting of tungtosilicic acid, hydrochloric acid, methane sulphonic acid, 1-naphthalene sulphonic acid, or any mixing thereof, preferably the acid catalyst is tungtosilicic acid or hydrochloric acid.

The biphasic liquid solution according to the invention comprises an organic phase. The preferred extractive organic phase for use in the present invention comprises an organic solvent that is immiscible with the acidified aqueous phase. In the organic phase, both reaction and extraction can occur.

The preferred organic solvents are alkanes with 4 to 12 carbons. Thus, for example, organic solvents mainly consisting of straight or branched aliphatic hydrocarbons (like decane or isooctane) may be used, but also mixture thereof from petrochemical or biological origin. The organic phase may also be formed during the process and not added from the start.

In a preferred embodiment, the organic phase further comprises an organic solvent, preferably the organic solvent is a petroleum fraction, more preferably the petroleum fraction contains sulfur. The presence of sulfur moderates the hydrogenation activity and the formation of the light naphtha. Where the organic solvent contains sulfur the content of sulfur in the organic fraction is at least 1 ppm% as based on the total weight of the organic fraction.

The volume ratio of the aqueous phase to the organic phase of the biphasic liquid mixture provided in step b) is ranging from 1:1 to 1:5. Indeed it has been found that such volume ratios influence the selectivity towards mono-oxygenated molecules comprising six carbon atoms.

As far as the yield of mono-oxygenated molecules comprising six carbon atoms is below 65 wt%. The process according to the invention may be self-sufficient in hydrogen. Indeed, the aqueous phase comprises non-converted oxygenated molecules, and the non-converted oxygenated molecules are used in a steam reforming process for hydrogen production which is recycled into the reactor vessel.

As discussed above, the first reaction step in the process comprises an acid-catalyzed hydrolysis of polymeric carbohydrates to monosaccharides, like glucose and fructose, which are further dehydrated to 5-HMF in the biphasic reactor. Because 5-HMF is very reactive towards acid degradation, extraction into the organic phase is important, where it is rapidly hydrogenated with the aid of the redox metal catalyst, preferably a Group VIIIB or VIB metal-containing catalyst (and most preferably a ruthenium catalyst or a nickel catalyst).

The group VIIIB or VIB metal comprises metal selected from the groups 8, 9 and 10 and in accordance to the invention consists of iron (Fe), ruthenium (Ru), osmium (Os), hassium (Hs), cobalt (Co), rhodium (Rh), iridium (Ir), nickel (Ni), palladium (Pd), platinum (Pt), molybdenum (Mo), tungsten (W) and/or any mixtures thereof.

Depending on the reaction time and reaction temperature, the reaction is able to produce high quantities of mono-oxygenated molecules comprising six carbon atoms, together with light naphtha (preferably C5 and C6 alkanes), without significant formation of insoluble polymers nor permanent gaseous products (when in ambient conditions).

In an embodiment, the redox catalyst comprises a metal selected from the group VIIIB or VIB (CAS terminology), preferably a metal selected from the group comprising Nickel, Ruthenium, Platinum, Palladium molybdenum (Mo), tungsten (W) and/or any mixing thereof, more preferably the redox catalyst comprises Nickel. Nickel has been found to increase selectivity towards 1-hexanol.

Whatever the metal used, the redox catalyst preferably comprises a hydrophobic support, preferably the hydrophobic support is a carbon support.

**Test methods**

Crystallinity measurement

The crystallinity of the carbohydrates contained in the bio-feedstock being for instance cellulose, hemicellulose or lignocellulose can be determine using the XRD peak height method. This empirical method is described in Park et al. Biotechnology for Biofuels 2010, 3:10 (method 1).

The crystallinity (or crystallinity index - CrI) is calculated as the ratio of the intensity of the crystalline signal ($I_{002}$-$I_{AM}$) and the total intensity ($I_{002}$), after subtraction of the background signal, according to the following equation:

$$CrI\ [\%] = ((I_{002}-I_{AM}))/I_{002}\ \times 100$$

In this equation, $I_{002}$ represents the maximum intensity of the signal corresponding to the (002) plane in the cellulose sample at a $2\theta$ angle between 22° and 24° and $I_{AM}$ is the intensity of the amorphous signal at a $2\theta$ angle of about 18°, corresponding to the minimum between the (002) and (101) plane signals.

The crystallinity was checked by XRD, recorded at room temperature on a STOE STADI P Combi diffractometer equipped with an image plate-position sensitive detector (IP-PSD). The diffracted intensity of Cu- K$\alpha$1 radiation ($\lambda$ = 0.15406 nm) was measured in a $2\theta$ range.

Product analysis

Samples from the organic phase were analyzed using an Agilent 6850 GC equipped with HP-1 column and FID-detector. Before analysis, n-nonane was added as an external standard. Identification of the products was based on retention time analysis and confirmed by GC-MS (Agilent 6890 GC with HP5-MS column and Agilent 5973 mass-selective detector). Product yields were calculated with the internal standard taking into account the respective sensitivity factors. For products of which no sensitivity factor could be obtained, quantification was done using relative response factors as obtained by ECN-based calculations.

Samples from the water phase were neutralized before analysis using the appropriate amount of an aqueous $CsCO_3$-solution and filtered before analysis. An Agilent series 1200 HPLC equipped with a Metacarb 67C column and RI detector was used. Identification of these products was based on retention time analysis, quantification of product yield was done using respective sensitivity factors.

Products are displayed in product-groups defined by their $C_xO_y$-ratio. $C_6O_6$-group contains dissolved mon-osaccharides, hexitols like sorbitol and mannitol but also their acid derivatives like isosorbide and sorbitans. The $C_6O_3$-group contains 5-hydroxymethylfurfural (HMF), dihydroxymethylfurans and triols. $C_6O_2$-group is composed of diols and diketones. $C_6O_1$ contains hexanols, 2,5-dimethyl tetrahydrofuran (2,5-DMTHF) and 2,5-dimethylfuran. Finally, a $C_6$-group contains hexane, isohexane, cyclohexane and methylcyclopentane and the $C_5$ groups contains pentane.

**Examples**

Catalyst pretreatment

Unless stated otherwise in the examples, a typical catalytic experiment was carried as follows: Ru/C (Sigma-Aldrich) (1 g) and thungstosilicic acid (TSA, Sigma-Aldrich) (0.25 g) were added to water (40 ml) in a 100 ml Parr stainless steel reactor. The reactor was closed, flushed three times with $N_2$ and then pressurized with 5 MPa of hydrogen ($H_2$). The reactor was stirred at 700 rpm while being heated to 210 °C (10 °C.min$^{-1}$) and was kept at this temperature for 1 hour. Afterwards, the reactor was cooled down to room temperature, depressurized and opened. The obtained slurry was filtered and washed with distilled water until a neutral pH of the washing water was observed. The powder was dried at room temperature before use and was indicated at htTSA(2)Ru/ C.

Reaction

Unless stated otherwise in the examples, a typical catalytic experiment was carried as follows: microcrystalline Avicel PH-101 cellulose (2 g), TSA hydrate (5 g), htTSA(2)Ru/C (0.5 g), water (20 ml) and n-decane (20 ml) were loaded into a 100 ml stainless steel batch reactor. The reactor was flushed with $N_2$ and subsequently pressurized with 5 MPa $H_2$. The mixture was stirred at 700 rpm and heated from room temperature to 150 °C in 20 minutes. Afterwards, a ramping rate of 0.5°C.min$^{-1}$ was used to further increase the temperature up to a maximum of 220°C. After the reaction, the reactor was cooled, depressurized and opened. Samples were taken from both the water and n-decane phases and centrifuged before analysis.

**Example 1: influence of the crystallinity**

In this example, a series of carbohydrate-containing bio-feedstock being cellulose of different crystallinities, different particle sizes and different degrees of polymerization, were subjected to the catalyst process according to the invention. The typical procedure was used with the following quantities: 2g cellulose, 0.57 M HCl, 0,5 g htTSA(2)Ru/C, 20 ml $H_2O$ + 20 ml Decane, $H_2$ pressure at RT = 5 MPa, Temp.= 10°C/min to 150°C, 0.5°C/min to 200°C.
Crystallinity was determined using the above-described method.
A set of commercial celluloses with varying properties were used, their parameters are shown in Table 1. All tested celluloses are highly pure glucose polymers, except for $\alpha$-cellulose which can contain up to 8% $C_5$-monosaccharides. Apart from the set of commercial celluloses, a highly crystalline material (Avicel) was treated using a dry ball milling procedure (6h of total milling time) to reduce the crystallinity of the material. Despite a significant decrease in crystallinity, the particle size and degree of polymerization remain roughly similar to the starting material.
Dry milling was performed as follows: Avicel PH-101 cellulose was ball milled in a Retsch PM 100 planetary ball mill for 6 h at 500 rpm (including 10 min cooldown intervals after every hour of milling).

Table 1: Physicochemical parameters of celluloses used

|  | Particle size ($\mu$m) | Crystallinity (%) | Degree of Polymerization (units) |
|---|---|---|---|
| Avicel PH101 | 68 | 46 | 161 |
| Sigmacell Type 50 | 97 | 46 | 165 |
| Sigmacell Type 20 | 29 | 44 | 168 |
| $\alpha$-cellulose | 30 | 31 | 702 |
| Ball-Milled Avicel (=BM) | 57 | 5 | 116 |

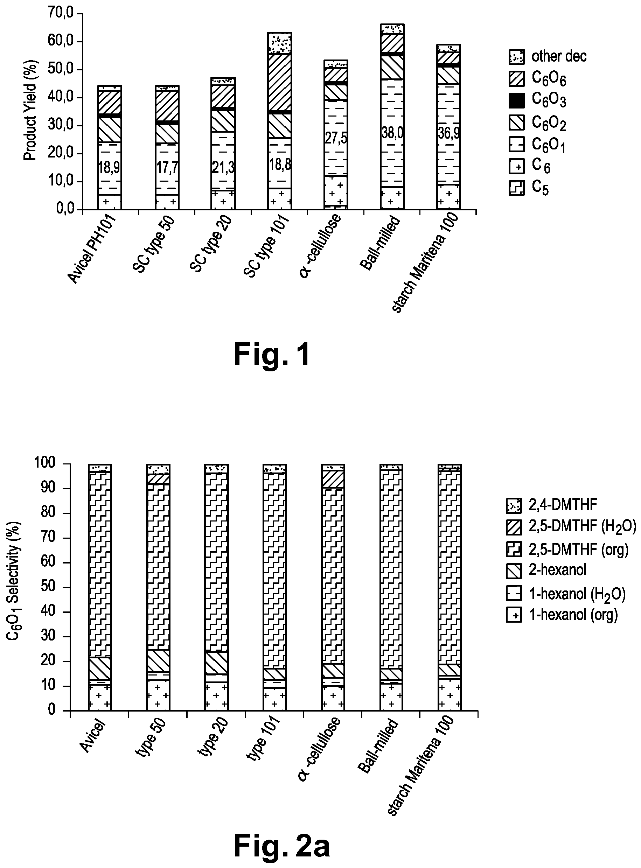

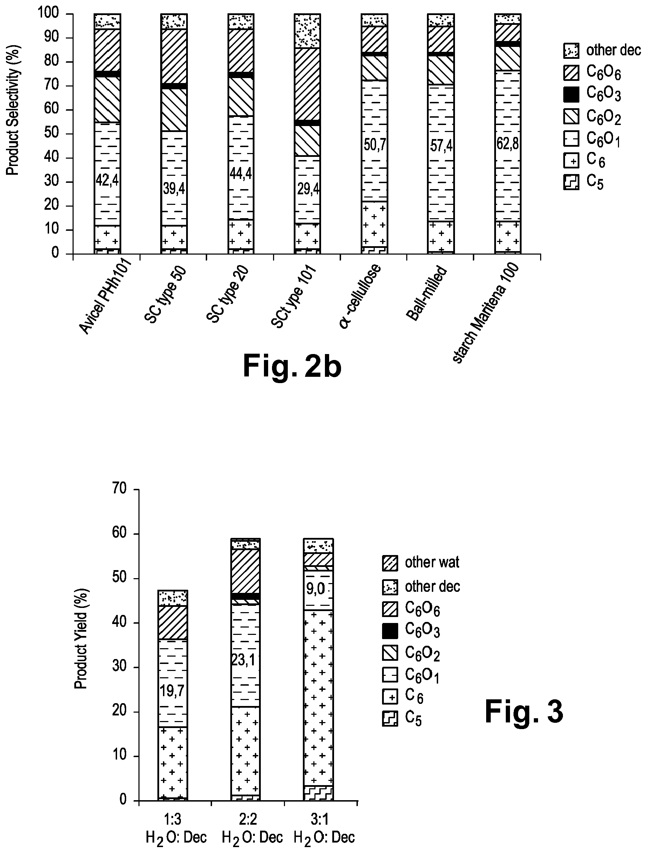

The various cellulose types were used as a substrate in the hydrolysis reaction. HCl was used as the acid in the aqueous phase. The results are shown in Figure 1.
Reactions with the various cellulose types showed the difference in the total product yield. The total product yield can be linked to the substrate crystallinity, while the degree of polymerization and particle size are subordinate parameters.
The results regarding product selectivity of $C_6O_1$ products in the conversion with cellulose types to liquid products with 0.57M HCl and htTSA(2)Ru/C are given in figure 2a.
$C_6O_1$ selectivity is also dependent on cellulose type. A selectivity plot for the various cellulose substrates is shown in Figure 2b and demonstrates that the selectivity towards $C_6O_1$ products is higherfor less crystalline materials. Cellulose characteristics significantly influence final yield and selectivity. In the used conditions, especially crystallinity influences the obtained yield.
The results also show that a pretreatment of the cellulose, like ball milling, can significantly increase the product yield.

**Example 2: influence of the water decane ratio**

In this example, the reaction conditions were as follows: 2g Avicel PH-101 cellulose, 72mM TSA, 0,5 g htTSA(2)Ru/C, decane + $H_2O$ = 40 ml ratio depending on experiment, $H_2$ pressure at RT = 5 MPa, Temp.= 10 °C/min to 150 °C, 0.5 °C/min to 200 °C.
The biphasic system consists of an aqueous and an organic phase. Decane was used here in the organic phase. The influence of the ratio between the water and the organic phase was investigated while keeping the total volume constant at 40 ml, results are shown in Figure 3. The highest yield in $C_6O_1$ products was obtained with a 1:1 ratio of decane and water. Lower concentrations of water result in a drop in total product yield, while increased water concentrations decrease the selectivity of $C_6O_1$ products significantly. The first effect can be explained by a decreased cellulose hydrolysis activity, while the latter is caused by a more efficient 2,5-DMTHF hydrolysis.

**Example 3: influence of the temperature**

In this example the reaction conditions were as follows: 2g Avicel PH-101 cellulose, 72 mM TSA, 0.5 g htTSA(2)Ru/C, 30 ml $H_2O$ + 10 ml Decane, $H_2$ pressure at RT = 5 MPa, Temp.: 10 °C/min to 150 °C, 0.5 °C/min to 220 °C,40 additional minutes at 220 °C.

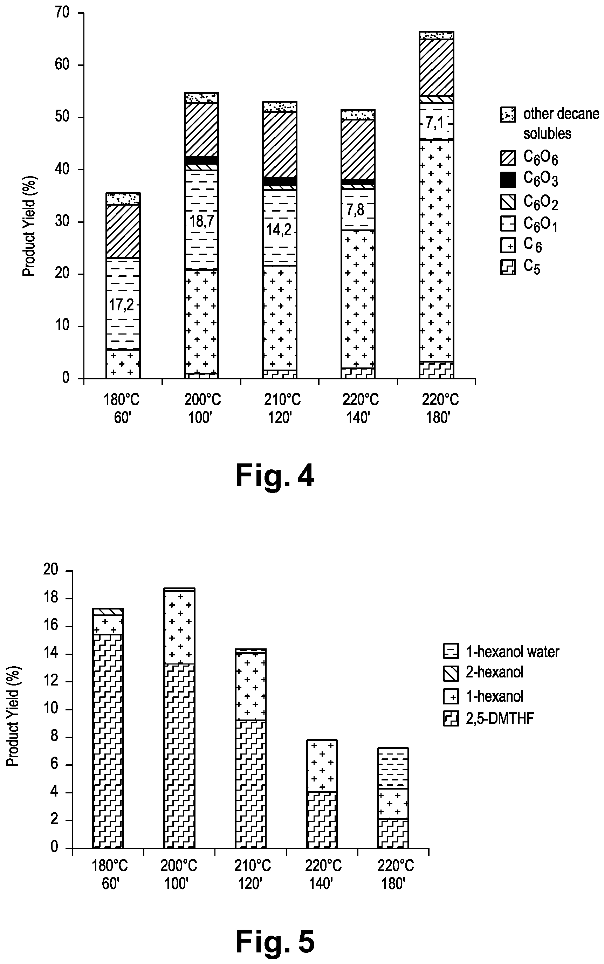

Figure 4 shows results of conversion of microcrystalline cellulose to liquid products with TSA and htTSA(2)Ru/C in function of time and temperature. $C_6O_1$-yield is indicated with data labels. It can be seen that product yield increases up to 200°C at which a plateau is reached. Prolonged reaction times do slightly increase the product yield. $C_6O_6$-products like sorbitol and sorbitans are very stable products. The htTSA(2)Ru/C-catalyst is unable to convert these molecules. Therefore, once formed, these products remain in the product mixture.

Temperatures below 200°C will result in higher $C_6O_1$-selectivity, but the yield is limited due to low cellulose conversion. Product distribution of the $C_6O_1$ group is displayed in figure 5. It shows that at low temperatures, 2,5-DMTHF is the main product, but as the temperature increases the bio-feedstock molecule is converted more efficiently and the selectivity of 1-hexanol seems to increase.

**Example 4: influence of the pressure**

In this example the reaction conditions were as follows: 2g Avicel PH-101 cellulose, 72mM TSA, 0.5 g htTSA(2)Ru/C, 20 ml $H_2O$ + 20 ml Decane, Temp.= 10 °C/min to 150 °C, 0.5 °C/min to 200 °C.

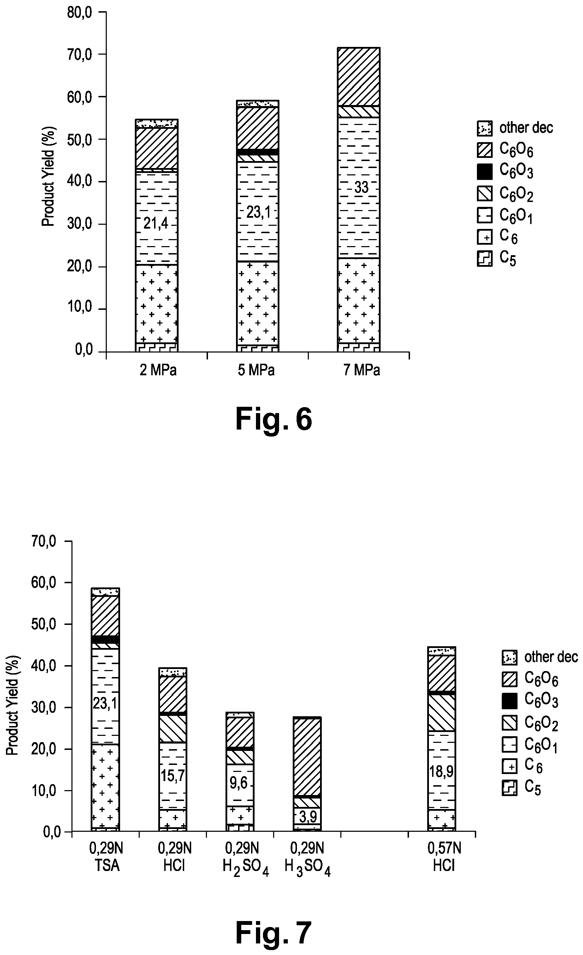

The influence of $H_2$-pressure was shortly investigated. An increase in $C_6O_1$ products was observed with increasing $H_2$-pressure. At least for Ru, increased $H_2$-pressure does not seem to promote glucose hydrogenation too much. Furthermore, the overall hexane yield is also very constant. Results are provided in figure 6.

**Example 5: influence of the acid catalyst of the aqueous phase**

In this example the reaction conditions were as follows: 2g Avicel PH-101 cellulose, various acids, 0.5 g htTSA(2)Ru/C, 20 ml $H_2O$ + 20 ml Decane, $H_2$ pressure at RT = 5 MPa, Temp.= 10 °C/min to 150°C, 0.5 °C/min to 20 0°C.

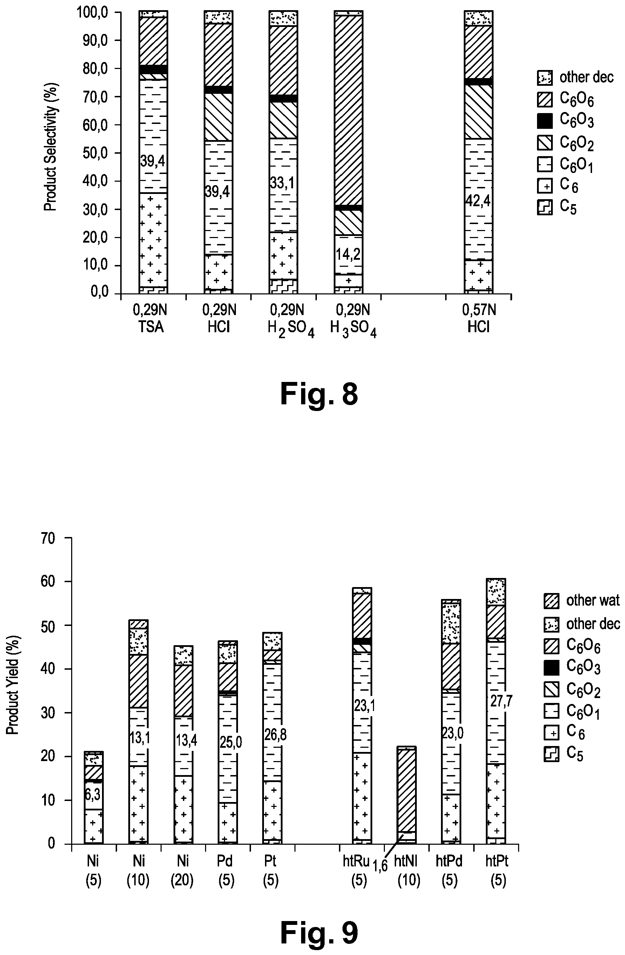

The acids in the water phase are mainly used to break down cellulose and must reach into the polymer. The search focused on the use of homogeneous acids. The results of the use of these acids can be seen in Figure 7. As it can be seen in the results it is possible to replace tungtosilicic acid (TSA) by less expensive homogeneous acids, but the total product yield is lower. A selectivity plot for the various acids is shown in Figure 8. In comparison to TSA, the homogeneous acids show a higher concentration of intermediate products, like glucose and 1,2-hexanediol. The decrease in total product yield, combined with the change in selectivity, therefore, suggests a slower overall reaction rate, including cellulose hydrolysis and all other acid-catalyzed reaction steps in the scheme.

**Example 6: influence of the redox catalyst of the organic phase**

In this example the reaction conditions were as follows: 2g Avicel PH-101 cellulose, 72mM TSA, 0.5 g catalyst, 20 ml $H_2O$ + 20 ml Decane, $H_2$ pressure at RT = 5 MPa, Temp.= 10°C/min to 150°C, 0.5°C/min to 200°C.

A short screening of various metals was conducted. For Ruthenium, prior art showed that a pretreatment of the metal is needed to reduce the glucose hydrogenation activity. As this activity could be metal-dependent, pretreated and non-pretreated versions of the catalysts were tested. Where possible, commercial catalysts were used (Pd/c and Pt/C). Ni/C was self-made by Ni impregnation, followed by reduction and further handling in the $O_2$-deficient atmosphere.

Figure 9 shows the catalytic result of a reaction with the various metal catalysts, for comparison a standard Ru-catalyst is added. For the non-pretreated materials, a lower product yield is found. Surprisingly, the amount of hydrogenated glucose product is limited, indicating that the need for a pretreatment step is specific to the metal used. 5 wt% Nickel gives a low product yield of 21%, but an increase of the metal loading up to 10 wt% also increases the product yield to 51%. A further increase of Ni to 20 wt% did not result in significant product gain, on the contrary, a small drop in product yield is noticed. The non-linear increase in product yield suggests a dispersion-dependent activity of Ni, Pd and Pt (5 wt% on C) gives product yields of respectively 46 and 48%. $C_6O_1$ yield is the highest for Pd and Pt, up to 27 %, and consists mainly out of 2,5-DMTHF. Ni-based catalysts show a significantly different selectivity in the $C_6O_1$ group, as 1-hexanol is the main component. The 1-hexanol selectivity drop with increasing Ni content and is thus probably linked to Ni-dispersion.

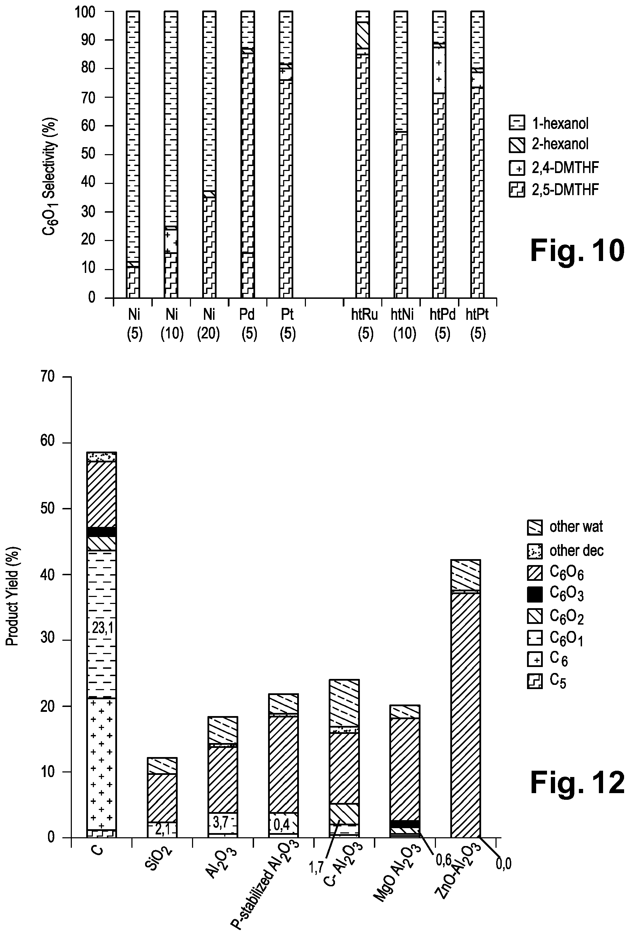

The difference in $C_6O_1$ selectivity could indicate a metal-dependent preference in the reaction pathway. In the middle of the reaction scheme (shown in Figure 11), two different pathways can be followed; pathway A converts 2,5-bis(hydroxymethyl)furan by retaining the primary alcohols and hydrogenating the aromatic furan ring, forming 2,5-bis(hydroxymethyl)tetrahydrofuran, which eventually leads to 1-hexanol, while pathway B removes the primary alcohols of 2,5-bis(hydroxymethyl)furan, which leads, after subsequent hydrogenation of the furanic ring, to 2,5-DMTHF.

Ni seems to prefer pathway A, forming high concentrations of 1-hexanol. A stability test of 1-hexanol in the presence of Ni/C also shows that Ni does not transform 1-hexanol to hexane (by hydrodeoxygenation) as Ru does. Ru, Pt and Pd convert HMF predominantly through pathway B. As shown above, the stability of 1-hexanol in presence of Ru is very low, therefore the 1-hexanol/,2,5-DMTHF ratio in the $C_6O_1$ selectivity plot cannot exclude that Ru, Pd and Pt do not form products through pathway A, as the intermediate products could all be converted into hexane of which determination of the pathway followed is impossible. For example, the 10 wt% Nickel catalyst shows a 1-hexanol yield of 11 %. Pd-catalyzed reactions show only 4 % yield in 1-hexanol but have 9 % of $C_6$-molecules formed. Therefore, 13 % of products could, in theory, be formed through pathway A.

Pretreating the catalyst in water at high temperatures, which has to be done for Ru to diminish the glucose to hexitol hydrogenation activity of the metal, was also done to the Ni, Pt and Pd catalysts. Results are shown in Figure 9 and show a slight increase in activity for Pd and Pt, bringing the activity to the same level as the pretreated Ru catalyst, while selectivity remains similar. For Ni-based catalysts, however, the pretreatment causes a significant drop in catalysts activity. Analysis of the product mixture showed 20% of hexitol yield, much higher than the non-treated Ni/C, and a mere 3 % of organic soluble products. These results suggest a change of the Ni activity in the conditions used. The stability of nickel in (presence of) hot liquid water is a known issue. The presence of significant amounts of hexitols does suggest that Ni is still present on the catalyst and that the metal is not removed during the pretreatment step after which the catalyst powder was rinsed with water. The selectivity in the $C_6O_1$-group of the pretreated Ni catalysts shows a high concentration of 2,5-DMTHF (Figure 10). Increased selectivity toward this product was also noticed with increased Ni-loading, suggesting that a drop in dispersion could be responsible for the changes in catalytic properties. This behaviour is in contrast to Ru, which shows a lower glucose hydrogenation activity for decreased Ru dispersion.

Long-term reactions or multiple uses of the non-pretreated catalyst will, therefore, result in low $C_6O_1$ product yields, similar to the pretreated material.

## Example 7: influence of the support

In this example the reaction conditions were as follows: 2g Avicel PH-101 cellulose, 72mM TSA, 0.5 g catalyst loaded with 5 wt% Ru, 20 ml $H_2O$ + 20 ml Decane, $H_2$ pressure at RT = 5 MPa, Temp.= 10 °C/min to 150 °C, 0.5 °C/min to 200 °C.

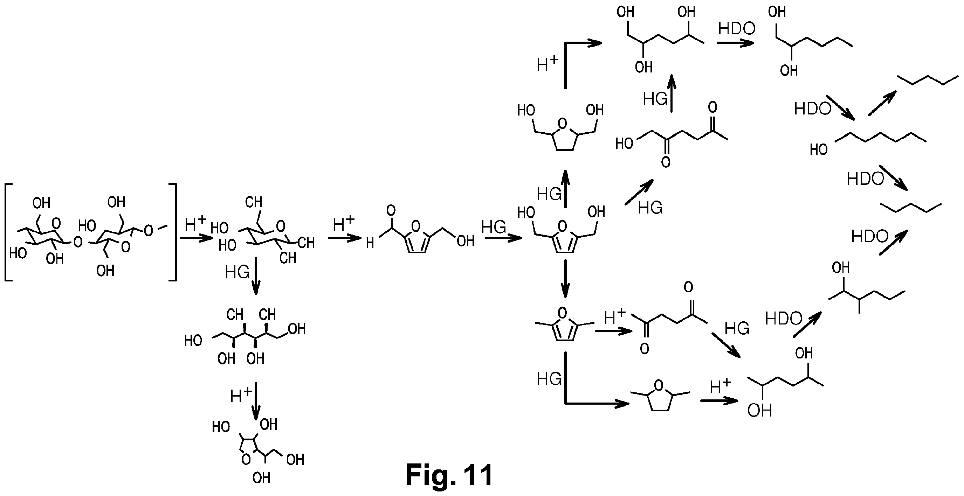

The support material was investigated. The supports chosen are all stable in hot liquid water and can, therefore, be used in this reaction. 5 wt% Ru was impregnated on various supports, the material was then reduced, pretreated with TSA and tested in the reaction, results are shown in Figure 12. The results clearly show that only Ru supported on carbon yields the intended products. All other supports give results in hexitols and derivates as the main products. A simple explanation can be found for this effect; only carbon is a hydrophobic material. This property will place the carbon catalyst in the organic phase while the other (hydrophilic) supports can be found in the water phase of the biphasic reaction. The results clearly show that, in order to prevent hexitol formation and form organic soluble products, the hydrogenation catalyst should be in the organic phase. The presence of the Ru-metal in the water phase will result in excessive glucose hydrogenation activity. As shown before, these molecules are very stable in the conditions used.

Another difference between carbon and non-carbon supports is the adsorption of TSA on the surface of the support. Carbons are known to adsorb TSA, and tests show that carbon-adsorbed TSA remains in the organic phase in reaction conditions. As will be shown below, the surface adsorbed TSA will influence the reaction selectivity by guiding the glucose into an acid-catalyzed pathway and prevent hydrogenation of sorbitol. The near absence of organic soluble products in all non-carbon supports suggests that a very low acidity is present on the support surface.

## Example 8: influence of the pH of the support

In this example the reaction conditions were as follows:2g Avicel PH-101 cellulose, 72mM TSA, 0.5 g 5 wt% Ru on various carbons, 20 ml $H_2O$ + 20 ml Decane, $H_2$ pressure at RT = 5 MPa, Temp.= 10 °C/min to 150 °C, 0.5 °C/min to 200 °C

Carbon (or at least hydrophobic) supports are needed to prevent glucose hydrogenation reactions. Typically, Ru/C bought from Sigma-Aldrich is used as a catalyst, but nothing is known about the parameters of the carbon support structure. Carbon materials can have very diverse properties, depending on the source of the carbon, the used pyrolysis method and any posttreatment the material has been subjected to. The carbon material surface area, pore structure, surface chemistry and the overall purity need to be known to select an ideal carbon support.

Various carbon supports, supplied by Norit (Cabotcorp), were impregnated with 5 wt% Ru, reduced in $H_2$, pretreated with TSA and finally used as catalysts in a standard reaction. Various parameters of the carbon materials are shown in Table_ 2.

Table 2: Physicochemical properties of various carbon support materials. The table is composed of data provided by suppliers or by own measurements.

| | | Activation treatment | pH | Pore structure | Purity |
|---|---|---|---|---|---|
| A Supra Eur | Powder | Steam | 6.8 | | High |
| R3 Extra | Pellet | Steam | 11.8 | | |
| CGP Super | Powder | Chemical | 3.1 | Micro/mesoporous | |
| GCN 1240 | Pellet | Chemical + Steam | 9.4 | | |
| CAP Super | Powder | Chemical | 2.5 | Micro/mesoporous | |
| C #1084 | Powder | Steam | 7.7 | Micro/mesoporous | High |
| C #1085 | Powder | Steam | 7.6 | Mesoporous, narrow PSD | High |
| C #1086 | Powder | Steam | 8.0 | Mesoporous, wide PSD | High |
| C #1087 | Powder | Chemical | 2.0 | Mesoporous | / |
| C #1088 | Fine powder | / | nd | From lignite: large | Low |

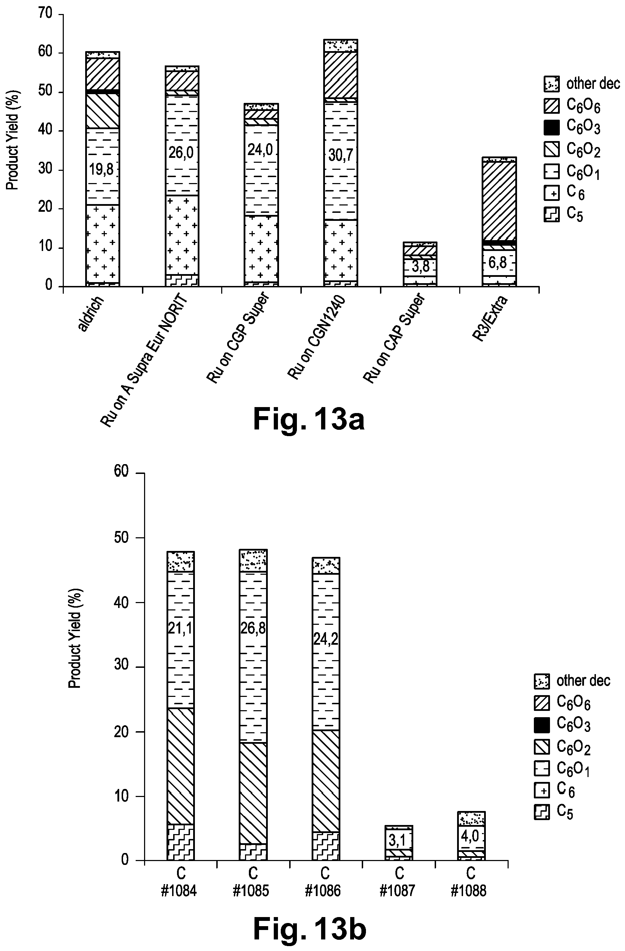

The various carbon supports show diverse results. Some materials show an activity surpassing the standard Ru/C from Aldrich, while others display very low activity. The high activity of the first group proves that it is possible to synthesize an active catalyst with the used impregnation method. A comparison of the catalytic data with the physicochemical properties suggests that the surface pH of the materials plays an important role in its catalytic activity. Materials with pH below 3.1, or above 9.4 display very low activity. In between these boundaries, a preference goes to light basic materials. Therefore, only materials which have been activated using a steam treatment, and did not receive chemical activation, qualify as potential catalyst supports for the intended reaction. A plot of the yield in organic products versus the pH of the carbon material is given in Figures 13 a and b.

**Example 9: influence of the acid to metal ratio on the catalyst**

In this example the reaction conditions were as follows: 2g Avicel PH-101 cellulose, 0.57M HCl, 0.5 g htT-SA(X)Ru/ pretreated with different amounts of TSA, 20 ml $H_2O$ + 20 ml Decane, $H_2$ pressure at RT = 5 MPa, Temp.= 10 °C/min to 150 °C, 0.5 °C/min to 200 °C

Variation of the acid concentration during the pretreatment will result in a different acid concentration on the surface of the carbon which could influence the reaction. A set of materials with varying TSA-concentration were synthesized and tested for their catalytic properties.

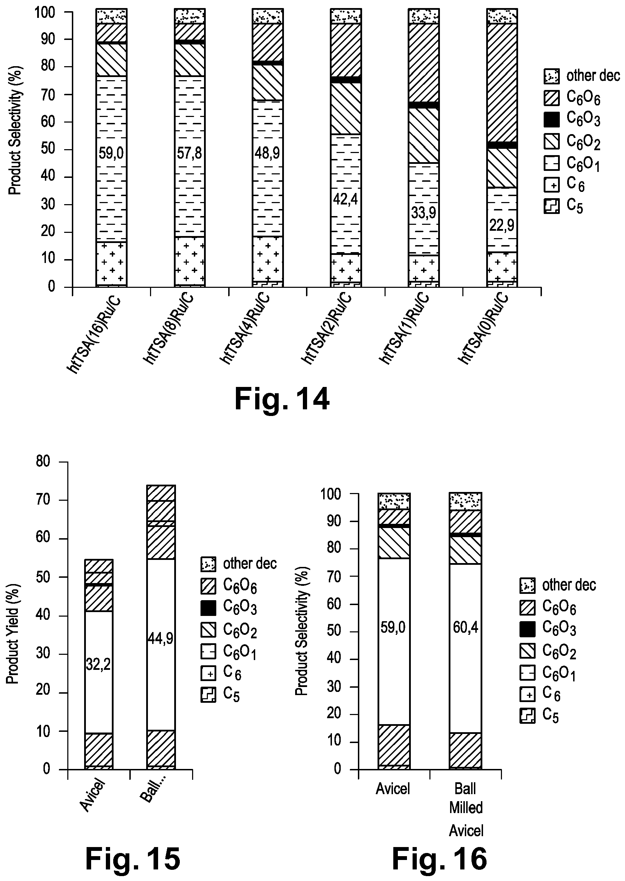

Excluding htTSA(2)Ru/C, which seems to give unexpected low product yield, all materials pretreated with TSA show an increased product yield when compared to an acid-free pretreated material (htTSA(0)Ru/C). More important is the increase in organic-soluble products, a trend clearly visible in the selectivity plot as shown in figure 14. Increasing the acid concentration during pretreatment up to 1.4 moles of acid sites results in a higher selectivity to $C_6O_1$ products.

Without being bound by a theory, an explanation for the shift in product selectivity with changed surface acid concentration can be found in the bifunctional character of the heterogeneous catalyst. A change in the metal/acid-ratio (Ru/TSA), here obtained by changing the TSA-concentration while maintaining a constant Ru-loading, can be used to explain the observed selectivity change. The role of Ru is to provide the material with a hydrogenation and hydrodeoxygenation activity, while the adsorbed TSA-molecules results in Brønsted acid sites. In materials with a high metal-acid ratio, hydrogenation activity is high, materials with low metal-acid ratio will result in a more pronounced acid-catalysis character. Despite being water soluble, product distribution shows that the substrate molecule most influenced by a change in metal/acid ratio is glucose. Materials with a high metal/acid ratio result in a significant formation of hydrogenated products and derivates, like sorbitol, sorbitans, etc. while low metal/acid ratios push glucose into acid-mediated pathways resulting in HMF.

It was found that use of lesser crystalline cellulose as a substrate results in an increase in product yield (see example 1). A combination of this result with the increased organic yield found here was investigated by using a concentrated acid pretreated catalyst in combination with ball-milled Avicel cellulose. Results are shown in Figure 15. A combination of low-crystalline cellulose and low metal/acid ratio results in a system with high total yields and low by-product formation. Almost 45% of cellulose-C atoms are converted into $C_6O_1$-C products. Selectivity for both types of cellulose is similar (Figure 16).

**Claims**

1. A biphasic catalytic process to produce an organic fraction containing mono-oxygenated molecules comprising six carbon atoms from a bio-feedstock containing carbohydrates and their use in a fluid catalytic cracking step, the process comprising the steps of:

   b) providing a reactor vessel with the bio-feedstock and with a biphasic liquid solution of:

   - an aqueous phase comprising an acid catalyst, and
   - an organic phase comprising a redox catalyst, optionally with an acid function;

   c) mixing the bio-feedstock with the biphasic liquid solution to form a biphasic liquid mixture with the carbohydrates being present in the aqueous phase, and bringing the reactor vessel under a hydrogen pressure of at most 10 MPa,
   d) heating the biphasic liquid reaction mixture until a first temperature T1 ranging from 70 °C to 180°C to have the acid catalyst converting the carbohydrates into a cut soluble in the organic phase, wherein the cut is continuously extracted from the aqueous phase into the organic phase,
   e) heating the biphasic liquid reaction mixture until a second temperature T2 ranging from 150 to 230°C, with T2 being higher than T1, and
   f) recovering the organic fraction, wherein said fraction contains a mixture of light naphtha and of mono-oxygenated molecules comprising six carbon atoms;

   the process being **characterized in that** in the carbohydrates contained in the bio-feedstock provided to the reactor vessel in step b) show a crystallinity equal or lower than 40% as determined according to XRD;
   and **in that** it further comprises subjecting the organic fraction recovered in step f) to a fluid catalytic cracking (FCC) process.

2. The biphasic catalytic process according to claim 1, **characterized in that** the carbohydrates contained in the bio-feedstock show a crystallinity equal or lower than 20% as determined according to XRD

3. The biphasic catalytic process according to claim 1 or 2 **characterized in that** the carbohydrates contained in the bio-feedstock are selected from the group comprising cellulose, hemicellulose, lignocellulose and/or a mixture thereof.

4. The biphasic catalytic process according to any one of claims 1 to 3, **characterized in that** the process includes the further step a) of subjecting the bio-feedstock containing carbohydrates to ball milling before providing it to the reactor vessel in step b).

5. The biphasic catalytic process according to any one of claims 1 to 4 **characterized in that** the volume ratio of the aqueous phase to the organic phase of the biphasic liquid mixture provided in step b) is ranging from 5:1 to 1:1.

6. The biphasic catalytic process according to any one of claims 1 to 5, **characterized in that** the second heating temperature T2 of step e) is ranging between 170 °C and 210 °C.

7. The biphasic catalytic process according to any of claims 1 to 6, **characterized in that** the organic phase further comprises an organic solvent containing sulfur, preferably the organic solvent is a petroleum fraction.

8. The biphasic catalytic process according to any one of claims 1 to 7, **characterized in that** the process further comprises a step g) of recovering the non-converted oxygenated molecules in the aqueous phase and using them into a steam reforming process for hydrogen production, preferably the hydrogen produced is supplied into the reactor at step c).

9. The biphasic catalytic process according to any one of claims 1 to 8, **characterized in that** the redox catalyst comprises a metal selected from the group VIIIB or VIB (CAS terminology), preferably a metal selected from the group comprising Nickel, Ruthenium, Platinum, Palladium, Iron, Cobalt, Molybdenum, Tungsten and/or any mixture thereof, more preferably the redox catalyst comprises Nickel.

10. The biphasic catalytic process according to any one of claims 1 to 9, **characterized in that** the redox catalyst comprises a hydrophobic support, preferably the hydrophobic support is a carbon support.

11. The biphasic catalytic process according to any one of claims 1 to 10, **characterized in that** the redox catalyst comprises a support with surface pH ranging between 3 and 10.

12. The biphasic catalytic process according to any one of claims 1 to 11, **characterized in that** the acid catalyst is selected from the group consisting of tungtosilicic acid, hydrochloric acid, 1-naphthalene sulphonic acid, or any mixing thereof, preferably the acid catalyst is tungtosilicic acid or hydrochloric acid.

13. The biphasic catalytic process according to any one of claims 1 to 12, **characterized in that** the hydrogen pressure of step b) is lower than 7 MPa and/or higher than 2 MPa.

14. The biphasic catalytic process according to any one of claims 1 to 12, **characterized in that** the acid to metal molar ratio of the catalyst is higher than 0.1, preferably higher than 0.15, more preferably higher than 0.2.

**Fig. 1**

**Fig. 2a**

**Fig. 2b**

**Fig. 3**

**Fig. 4**

**Fig. 5**

**Fig. 6**

**Fig. 7**

Fig. 8

Fig. 9

Fig. 10

Fig. 12

**Fig. 11**

Fig. 13a

Fig. 13b

**Fig. 14**

**Fig. 15**

**Fig. 16**

Europäisches
Patentamt

European
Patent Office

Office européen
des brevets

## EUROPEAN SEARCH REPORT

Application Number

EP 18 17 4481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2017/190978 A1 (DUSSELIER MICHIEL JULIEN [BE] ET AL) 6 July 2017 (2017-07-06) * paragraphs [0014], [0048], [0050], [0051], [0053], [0056], [0061], [0062] - [0067] * * paragraphs [0068] - [0074] * * paragraphs [0077] - [0079] * * examples 1-8; tables 1-8 * | 1-14 | INV. C10G1/06 C01B3/32 C10G11/18 C10G3/00 C10G1/08 |
| A | US 2013/118059 A1 (LANGE JEAN PAUL [NL] ET AL) 16 May 2013 (2013-05-16) * examples 1-3; tables 1-3 * | 1-14 | |
| A | US 2012/302765 A1 (DUMESIC JAMES [US] ET AL) 29 November 2012 (2012-11-29) * examples 1-9 * | 1-14 | |

**TECHNICAL FIELDS SEARCHED (IPC)**

C10G
C01B

The present search report has been drawn up for all claims

| Place of search | Date of completion of the search | Examiner |
|---|---|---|
| The Hague | 25 October 2018 | Bernet, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 4481

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2018

| Patent document cited in search report | | Publication date | Patent family member(s) | | Publication date |
|---|---|---|---|---|---|
| US 2017190978 | A1 | 06-07-2017 | EP | 3143101 A1 | 22-03-2017 |
| | | | US | 2017190978 A1 | 06-07-2017 |
| | | | WO | 2015172208 A1 | 19-11-2015 |
| US 2013118059 | A1 | 16-05-2013 | AU | 2012338868 A1 | 01-05-2014 |
| | | | BR | 112014011506 A2 | 09-05-2017 |
| | | | CA | 2855584 A1 | 23-05-2013 |
| | | | CN | 104011177 A | 27-08-2014 |
| | | | EP | 2780433 A1 | 24-09-2014 |
| | | | US | 2013118059 A1 | 16-05-2013 |
| | | | WO | 2013072391 A1 | 23-05-2013 |
| US 2012302765 | A1 | 29-11-2012 | US | 2012302765 A1 | 29-11-2012 |
| | | | WO | 2012162001 A1 | 29-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012145123 A
- WO 2013074437 A
- WO 2012162001 A
- WO 2015172208 A
- EP 0663434 A

**Non-patent literature cited in the description**

- **MEIER ; JAKOBI ; FAIX.** Catalytic Hydroliquefaction of Spruce Wood. *Journal of Wood Chemistry and Technology,* 1988, vol. 8 (4), 523-542
- **A. CORMA et al.** *Energy Environ. Sci.,* 2012, vol. 5, 6328-6344
- **PARK et al.** *Biotechnology for Biofuels,* 2010, vol. 3, 10